Europäisches Patentamt

European Patent Office

Office européen des brevets

(11) Veröffentlichungsnummer : **0 239 787 B1**

# (12) EUROPÄISCHE PATENTSCHRIFT

(45) Veröffentlichungstag der Patentschrift :
09.01.91 Patentblatt 91/02

(51) Int. Cl.$^5$ : **C08G 65/20**

(21) Anmeldenummer : 87102690.2

(22) Anmeldetag : 25.02.87

(54) Verfahren zur Herstellung von Polyoxibutylenpolyoxialkylenglykolen mit enger Molekulargewichtsverteilung und vermindertem Gehalt an oligomeren cyclischen Ethern.

(30) Priorität : 28.02.86 DE 3606479

(43) Veröffentlichungstag der Anmeldung :
07.10.87 Patentblatt 87/41

(45) Bekanntmachung des Hinweises auf die
Patenterteilung :
09.01.91 Patentblatt 91/02

(84) Benannte Vertragsstaaten :
BE DE FR GB IT LU NL

(56) Entgegenhaltungen :
EP-A- 0 104 609
US-A- 3 344 088
JOURNAL OF POLYMER SCIENCE, PART A-1,
Band 9, 1971, Seiten 265-279, John Wiley &
Sons, Inc.; J.M. HAMMOND et al.: "Cationic
copolymerization of tetrahydrofuran with
epoxides. I. Polymerization mechanism in the
presence of a gycol"

(56) Entgegenhaltungen :
CHEMICAL ABSTRACTS, Band 76, Nr. 10, 6.
März 1972, Seite 5, Zusammenfassung Nr.
46572k, Columbus, Ohio, US; J.M. ANDREWS
et al.: "Oligomers in poly(tetrahydrofuran)", &
POLYMER 1971, 12(10), 642-9
JOURNAL OF POLYMER SCIENCE, PART A-1,
Band 9, 1971, Seiten 281-294, John Wiley &
Sons, Inc.; J.M. HAMMOND et al.: "Cationic
copolymerization of tetrahydrofuran with
epoxides. II. Characterization and
gel-permeation chromatography of
by-products formed during polymerization"
CHEMICAL ABSTRACTS, Band 72, Nr. 10, 9.
März 1970, Seite 23, Zusammenfassung Nr.
44411a, Columbus, Ohio, US; M.A.
DEMENT'EVA et al.: "Flexible cold-resistant
polyurethane foam", & PLAST. MASSY 1969,
(11), 23-5

(73) Patentinhaber : BASF Aktiengesellschaft
Carl-Bosch-Strasse 38
D-6700 Ludwigshafen (DE)

(72) Erfinder : Müller, Herbert, Dr.
Carostrasse 53
D-6710 Frankenthal (DE)

## Beschreibung

Diese Erfindung betrifft ein Verfahren zur diskontinuierlichen Herstellung von Polyoxibutylenpolyoxialkylenglykolen durch Copolymerisation von Tetrahydrofuran mit 1,2-Alkylenoxiden an Bleicherdekatalysatoren, bei dem man Copolymere mit besonders enger Molekulargewichtsverteilung und mit einem geringen Gehalt an verunreinigenden oligomeren cyclischen Ethern erhält.

In der GB-PS 854 958 wird ein Verfahren zur Copolymerisation von Tetrahydrofuran und Alkylenoxiden beschrieben, bei dem man die Polymerisation in Gegenwart von Verbindungen mit reaktivem Wasserstoff und an Bleicherde-Katalysatoren durchführt. Bei diesem Verfahren fallen als Nebenprodukte verhältnismäßig große Mengen niedermolekularer Produkte an, die überwiegend aus oligomeren cyclischen Ethern bestehen. Die Molekulargewichtsverteilung der Polyoxibutylenpolyoxialkylenglykole ist sehr breit. Sie kann abhängig vom mittleren Molekulargewicht einen Heterogenitätsquotienten $M_w/M_n$ von 3 bis 4 für den Molekulargewichtsbereich 1000 bis 2000 annehmen ($M_w$ = Gewichtsmittelmolekulargewicht und $M_n$ = Zahlenmittelmolekulargewicht).

Die oligomeren cyclischen Ether sind unerwünschte Verunreinigungen der Polymerisate, da sie inertes Material darstellen und die Qualität der aus den polymeren Glykolen hergestellten Endpolymerisate vermindern. So setzt das Inertmaterial das mechanische Niveau der aus den Copolymeren hergestellten Polyurethane herab. Die Oligomeren können an der Oberfläche der Fertigprodukte ausschwitzen oder von Lösungsmitteln herausgelöst werden, wodurch die Formstabilität der Formkörper beeinträchtigt wird. Zu ihrer Verminderung sind schon verschiedene Vorschläge gemacht worden. So wird z.B. in der EP-A-6107 der Vorschlag gemacht, die Copolymerisate bei höherer Temperatur mit einem aktivierten Montmorillonit zu behandeln. Bei diesem Verfahren, bei dem die oligomeren cyclischen Ether einer aufwendigen Depolymerisaation in Gegenwart der erwünschten Polymerisate unterworfen werden, wird eine quantitative Entfernung der cyclischen Ether nicht erreicht. Zur Vermeidung dieser Nachteile wird in der US-PS 4 127 513 der Vorschlag gemacht, als Katalysator einen besonders aktivierten Montmorillonit zu verwenden, der dadurch entsteht, daß man die Säureaktivierung der Bleicherde mit höherkonzentrierten Säuren vornimmt, so daß die austauschbaren Alkali- und Erdalkali-Ionen nahezu vollständig durch Wasserstoff substituiert werden. Nachteilig sind bei diesem Prozeß die hohe Farbzahl der Polymerisate, eine verhältnismäßig geringe Polymerisationsgeschwindigkeit und ein Anteil an oligomeren cyclischen Ethern, der immer noch bei 5 bis 6 Gew.-% liegt.

Ein weiterer Verbesserungsvorschlag für die Copolymerisation von Alkylenoxiden mit Tetrahydrofuran unter dem katalytischen Einfluß von aktivierter Bleicherde ist der US-PS 4 228 272 zu entnehmen. Er sieht die Verwendung von Bleicherden mit einem bestimmten spezifischen Porenvolumen, einer definierten Katalysatoroberfläche und einem definierten Porendurchmesser vor. Nach diesem Verfahren sollen Produkte mit verbesserter Farbzahl bei erhöhter Polymerisationsgeschwindigkeit erhalten werden. Ihr Oligomerengehalt ist aber mit etwa 4 Gew.-% (vgl. Spalte 5, Zeilen 14 und 15) für die Anwendung der Copolymeren zur Herstellung von Polyurethanen, an die höhere mechanische Ansprüche gestellt werden, zu hoch. Bekanntlich liefern alle Verfahren zur Copolymerisation von Alkylenoxiden mit Tetrahydrofuran in Gegenwart von Bleicherden hochmolekulare Copolymere mit endständigen Hydroxylgruppen, die stets durch einen mehr oder weniger hohen Gehalt an macrocyclischen Polyethern ohne Hydroxylgruppen verunreinigt sind. Deshalb wurden auch Vorschläge gemacht, die cyclischen Ether durch eine Extraktion mit Kohlenwasserstoffen, Wasser oder überkritischen Gasen (US-Patentschriften 4 500 705, 4 251 654 und 4 306 058) zu entfernen.

In der DE-OS 3 346 136 wird ein Verfahren zur Copolymerisation von Alkylenoxiden und Tetrahydrofuran beschrieben, bei dem sich der Anfall an cyclischen oligomeren Ethern dadurch unter 2 Gew.-% zurückdrängen läßt, daß man kontinuierlich in einem Reaktor polymerisiert und dem im Kreis geführten Reaktionsgemisch weniger als 30 Gew.-% an Frischzulauf aus Tetrahydrofuran und 1,2-Alkylenoxid zuführt. Bei diesem Verfahren ist nachteilig, daß Polymerisate entstehen, die eine breite Molekulargewichtsverteilung aufweisen. So liegt der Heterogenitätsquotient $M_w/M_n$ hier bei über 4. Polyurethane oder auch Polyester, die aus diesen breitverteilten Copolymeren mit einem erhöhten Anteil an hochmolekularen Produkten hergestellt werden, sind für viele Anwendungsbereiche ungeeignet. Durch Kristallisationsvorgänge und Separierung von Phasen im Fertigprodukt (durch Trübung und Opaleszenz erkennbar) wird dessen mechanisches Niveau herabgesetzt.

Aus der EP-A- 0 104 609 ist bekannt, daß man Polyoxibutylenpolyoxialkylenglykolcarbonsäurediester mit einem niedrigen Gehalt an oligomeren cyclischen Ethern erhält, wenn man die Copolymerisation von Tetrahydrofuran mit einem 1,2-Alkylenoxid in Gegenwart von Carbonsäureanhydrid und Bleicherde mit einem Wassergehalt von weniger als 3 Gew.% durchführt. Auch bei diesem Verfahren erhält man Copolymerisate mit einer ungenügenden Molekulargewichtsverteilung.

Aufgabe der vorliegenden Erfindung war es, ein Verfahren zur Herstellung hochwertiger Copolymerer aus Tetrahydrofuran und 1,2-Alkylenoxiden zu finden, bei dem die Bildung merklicher Mengen an oligomeren cyclischen

Ethern vermieden wird und Copolymerisate mit einer engen Molekulargewichtsverteilung $M_w/M_n$ von 1,5 bis 2,8 für Molekulargewichte zwischen 1000 und 2000 erhalten werden.

Es wurde nun gefunden, daß man bei der diskontinuierlichen Herstellung von polyoxibutylenpolyoxialkylenglykolen durch Copolymerisation von Tetrahydrofuran mit 1,2-Alkylenoxid in Gegenwart von Verbindungen mit reaktivem Wasserstoff, die in Mengen von 0,5 bis 10 Mol-%, bezogen auf das Tetrahydrofuran, eingesetzt werden, wobei man die Polymerisation an einem Bleicherde- oder Zeolith-Katalysator, der in der protonisierten Form vorliegt und einen Wassergehalt von unter 0,5 Gew.-% aufweist, durchführt und wobei man gegebenenfalls gebildete Estergruppen enthaltende Copolymere auf an sich übliche Weise verseift, die gewünschten vorteilhaften Ergebnisse erhält, wenn man das 1,2-Alkylenoxid dem Reaktionsgemisch so zuleitet, daß die Konzentration des 1,2-Alkylenoxids im Reaktionsgemisch während der polymerisation im wesentlichen konstant und unter 2 Gew.-% gehalten wird.

Als 1,2-Alkylenoxide kommen substituierte oder unsubstituierte Alkylenoxide in Betracht. Als substituenten seien z.B. lineare oder verzweigte Alkylgruppen mit 1 bis 6, vorzugsweise 1 bis 2 C-Atomen, Phenylreste, durch Alkyl- und/oder Alkoxygruppen mit 1 bis 2 C-Atomen oder Halogenatomen substituierte Phenylreste oder Halogenatome, vorzugsweise Chloratome genannt. Besonders geeignete 1.,2-Alkylenoxide sind z.B. 1,2-Butylenoxid, 2,3-Butylenoxid, styroloxid, Epichlorhydrin und vorzugsweise Ethylenoxid und 1,2-Propylenoxid. Die 1,2-Alkylenoxide können einzeln oder in Form von Mischnungen, beispielsweise als ein Gemisch aus Ethylenoxid und 1,2-Propylenoxide verwendet werden.

Verbindungen mit reaktivem Wasserstoff sind beispielsweise Wasser, einund mehrwertige Alkohole, wie Methanol, Ethanol, Propanol, Ethylenglykol, Butylenglykol, Glyzerin, Neopentylglykol und Butandiol-1,4 sowie insbesondere Carbonsäuren mit 1 bis 8 Kohlenstoffatomen. Es können auch Polyetheralkohole und Polyetherglykole, wie das Polytetramethylenetherglykol (PTHF) als Verbindung mit aktivem Wasserstoff bei der Copolymerisation verwendet werden. Die Verbindungen mit reaktivem Wasserstoff werden in Mengen von 0,5 bis 10 Mol%, bezogen auf das Tetrahydrofuran, eingesetzt.

Am einfachsten und am wirtschaftlichsten gestaltet sich das Verfahren, wenn Wasser verwendet wird. Wasser und mehrwertige Alkohole führen zur Bildung von Polyetheralkoholen, die zwei-oder mehrfachfunktional sein können. Da man beim Einsatz von Carbonsäuren polymere Halbester erhält, unterwirft man die Estergruppen enthaltenden Copolymeren einer an sich üblichen Verseifung. Man verfährt dabei z.B. so, daß man die Copolymerisate in Anwesenheit oder Abwesenheit von inerten Lösungsmitteln mit wäßrigen Alkalihydroxiden erhitzt oder besser, z.B. nach Methoden, wie sie in der US-PS 2 499 725 oder in J. Am. Chem. Soc. 70, 1842, beschrieben werden, unter der katalytischen Wirkung eines Alkalialkoholates einer Umesterung mit z.B. Methanol, unterwirft.

Die als Katalysatoren zu verwendenden Bleicherden werden z.B. in Ullmann's Enzyklopädie der technischen Chemie, 3. Auflage, Band IV, Seiten 541 bis 545 beschrieben. Es sind natürliche öder synthetische Bleicherden, wie Aluminiumhydrosylikate oder Aluminiummagnesiumhydrosylikate vom Typ des Montmorillonits, die durch Säure in die Wasserstoffionenform überführt worden sind und z.B. unter der Bezeichnung ®Tonsil im Handel erhältlich sind. Synthetische Bleicherden werden z.B. in der GB-PS 854 958 beschrieben. Auch synthetische, zeolithische Alumosylikate, wie der im Handel befindliche Katalysator KC-Perlkator® D 10, eignen sich in der protonisierten Form als Katalysator. Bleicherden oder auch synthetische Zeolithe können bedingt durch ihre Herstellung wechselnde Wassermengen von ca. 1 bis 7 Gew.-% enthalten. Durch Trocknen oberhalb von 100°C verlieren diese Katalysatoren das adsorbierte Wasser, nehmen es an der Luft aber wieder begierig auf, da sie hygroskopisch sind. Für die Ausübung des erfindungsgemäßen Verfahrens werden solche Bleicherdekatalysatoren verwendet, deren Wassergehalt unter 0,5, vorzugsweise unter 0,1 Gew.-%, insbesondere unter 0,05 Gew.-% liegt. Den natürlichen Bleicherden werden als Katalysatoren für das erfindungsgemäße Verfahren gegenüber den synthetischen Alumosilikaten der Vorzug gegeben.

Das erfindungsgemäße Verfahren wird diskontinuierlich an festen Bleicherde- oder Zeolith-Katalysatoren durchgeführt. Damit das Gemisch aus Tetrahydrofuran, 1,2-Alkylenoxid und der Verbindung mit aktivem Wasserstoff intensiv miteinander in Berührung kommt, bewegt man entweder den Festkatalysator in den Ausgangskomponenten oder die Mischung der Reaktionskomponenten im Verhältnis zum statisch angeordneten Festkatalysator.

Im ersten Fall verwendet man z.B. gerührte Gefäße, in denen der Katalysator suspendiert ist. Im zweiten Falle verfährt man beispielsweise so, daß man das Gemisch der Reaktionskomponenten über den festangeordneten Katalysator leitet. Die zweite Verfahrensvariante wird aus verschiedenen Gründen bevorzugt. Sie ermöglicht z.B. eine saubere Temperaturführung und die Gewinnung eines katalysatorfreien Reaktionsgemisches.

Um den Katalysator als im Reaktor festangeordneten Katalysator verwenden zu können, verfährt man z.B. so, daß man handelsübliche wasserhaltige Bleicherde, z.B. mit Bindemitteln, insbesondere Wasser verknetet und zu Formkörpern verpreßt. Anschließend entwässert man die wasserhaltigen Formkörper oberhalb 100°C, vorzugsweise bei Temperaturen von 150 bis 700°C bei Normaldruck oder bei vermindertem Druck, gegebenenfalls in Gegenwart von unter den Reaktionsbedingungen inerten Gasen, z.B. Edelgasen, wie Helium oder Argon oder insbesondere Stickstoff. Der Wassergehalt der Katalysatorformkörper liegt danach bei Werten unter 0,5 Gew.-%. Man reduziert ihn vorzugsweise auf einen Wert unter 0,2 Gew.-%. Die Bleicherdepreßlinge können z.B. die Form von Kugeln, Ringen, Zylindern oder Tabletten aufweisen. Bei Verwendung von kugelförmigen Bleicherdeformkörpern weisen die Kugeln im allgemeinen einen Durchmesser von 2 bis 15 mm, vorzugsweise von 3 bis 5 mm auf. Als zylinderförmige Formkörper werden im allgemeinen Zylinder mit einer Länge von 2 bis 15 mm und einem Durchmesser von 2 bis 6 mm verwendet. Nicht kugel- oder zylinderförmige Formkörper weisen im allgemeinen ein Volumen auf, das den zylinderförmigen Formkörpern entspricht. Auch ring- oder sternchenförmig verpreßte Formkörper, die bei sehr großer Oberfläche einen geringen Strömungswiderstand bieten, können mit Vorteil eingesetzt werden.

Die Katalysatorformkörper werden in dem Reaktor z.B. durch einfaches Aufschütten festangeordnet. Das durch das Reaktionsgemisch durchströmte Katalysatorbett muß auch nach längerem Betrieb nicht erneuert werden, da die Katalysatorformkörper ihre ursprüngliche feste Form behalten und keinen Abrieb erleiden. Die Katalysatoren zeichnen sich durch einen geringen Aktivitätsverlust aus und besitzen eine fast unbegrenzt lange Lebensdauer.

Als Reaktoren eignen sich für das erfindungsgemäße Verfahren z.B. säulenförmige Reaktionsgefäße, die einen Querschnitt von beliebiger Form, beispielsweise eines Quadrates oder einer Ellipse aufweisen. Zweckmäßigerweise verwendet man langgestreckte zylinderförmige Reaktionsgefäße. Das Verhältnis von Innendurchmesser zur Länge des Reaktionsgefäßes beträgt im allgemeinen 1 : 2 bis 1: 100, vorzugsweise 1 : 10 bis 1 : 40. Die Reaktoren können senkrecht oder waagrecht ausgerichtet sein und auch Zwischenlagen einnehmen. Vorzugsweise verwendet man als Reaktoren jedoch senkrecht stehende Röhrenöfen, bei denen der Rohrdurchmesser etwa 10 bis 100 mm beträgt, wenn die Wärmetönung im Reaktionsgefäß abgeführt werden soll. Will man die Temperatur durch einen im äußeren Kreislauf eingebauten Wärmetauscher regulieren, so kann man als Reaktor auch einen Schachtofen verwenden.

Durch den Reaktor wird das Gemisch der Ausgangsstoffe z.B. mittels einer Umlaufpumpe geleitet. Dabei hält man die Konzentration des Alkylenoxids im Reaktionsgemisch während der Polymerisation unter 2 Gew.-%, vorteilhaft zwischen 0,1 und 1 Gew.-% und insbesondere bei 0,1 bis 0,5 Gew.-%. Gleichzeitig sorgt man für eine im wesentlichen konstante Konzentration des Alkylenoxids im Reaktionsgemisch. Unter einer im wesentlichen konstanten Konzentration des Alkylenoxids wird eine Konzentration verstanden, deren Abweichung nicht über 10% hinausgeht. Das Reaktionsgemisch wird so lange im Kreise gepumpt, bis der gewünschte Umsetzungsgrad erreicht ist. Die Dauer der Reaktionszeit, während der das Reaktionsgemisch über den im Reaktor angeordneten Katalysator gepumpt wird, kann in Abhängigkeit von der gewünschten copolymeren Zusammensetzung in verhältnismäßig weiten Grenzen variiert werden. Will man z.B. ein Copolymeres erhalten, das in der Endzusammensetzung etwa 20 Gew.-% Alkylenoxid enthält, und hält man die Konzentration des Alkylenoxids im Reaktionsgemisch während der gesamten Umsetzung konstant bei 0,2 bis 0,5 Gew.-%, so erreicht man nach ca. 5 bis 10 Stunden eine Umsetzung von ca. 50 Gew.-%, sofern sich Katalysatorvolumen und stündlich umgewälzte Reaktionsmischung etwa im Verhältnis 1 : 1 bis 1 : 5 bewegen. Das Verhältnis des Gesamtvolumens der Reaktionskomponenten zum Katalysatorvolumen liegt dabei zwischen den Werten 5 : 1 und 1 : 1. Die benötigte Reaktionszeit ist umgekehrt proportional zur angewendeten Alkylenoxidkonzentration in der Reaktionsmischung.

Die Einsatzstoffe Tetrahydrofuran und 1,2-Alkylenoxide werden zweckmäßigerweise in möglichst reiner Form eingesetzt. Dadurch wird eine lange Lebensdauer der Katalysatoren gewährleistet. Das Tetrahydrofuran kann zum Zwecke der Reinigung vor der Polymerisation mit starken Mineralsäuren, organischen Sulfonsäuren, Silikaten und vorzugsweise Bleicherden nach dem in der EP-OS 3 112 beschriebenen Verfahren vorbehandelt werden. Es lassen sich verschiedene 1,2-Alkylenoxide wie auch Mischungen verschiedener Verbindungen mit aktivem Wasserstoff gleichzeitig in einem Reaktionsansatz einsetzen.

Das Molverhältnis zwischen der eingesetzten Menge an Tetrahydrofuran und der Menge an 1,2-Alkylenoxid liegt z.B. zwischen 15 : 1 und 2 : 1, vorzugsweise zwischen 10 : 1 und 5 : 1. Wichtig ist, daß man bei der Zugabe des 1,2-Alkylenoxids dafür sorgt, daß dessen Konzentration im Gemisch unter 2 Gew.-% bleibt. Es empfiehlt sich, das Molverhältnis der beiden Monomeren am Katalysator während der überwiegenden Reaktionszeit, vorzugsweise während 80 bis 99% der Gesamtreaktionszeit, möglichst konstant zu halten. Lediglich bei einer Nachreaktionszeit kann die Konzentration an Alkylenoxid durch vollständige Abreaktion bis auf 0 fallen. Die wünschenswerte Konstanz der Alkylenoxid-Konzentration im Reaktionsgemisch erreicht man dadurch, daß der Monomerenmischung das Alkylenoxid in dem Maße zugeführt wird, wie sich dessen Konzentration durch Polymerisation im Reaktionsansatz verändert. Die Menge an Alkylenoxid, die im gesamten zeitlichen Verlauf zur Polymerisation gebracht wird, kann in sehr breiten Grenzen schwanken. Copolymere, die sich zu interessanten Endprodukten verarbeiten lassen, enthalten z.B. 5 bis 50, insbesondere 10 bis 30 Gew.-% Alkylenoxid. Nach Beendigung der Umsetzung ist Alkylenoxid wünschenswerterweise vollständig umgesetzt, während überschüssiges Tetrahydrofuran, das in Abwesenheit des Alkylenoxids am Katalysator nicht weiterreagiert, als Lösungsmittel für das Copolymere im Gemisch verbleibt. Die Konzentration des Polymeren im Tetrahydrofuran liegt z.B. bei 30 bis 60 Gew.-%.

Die Copolymerisation am festangeordneten Katalysatorbett oder im bewegten Katalysatorbett führt man zweckmäßig im Temperaturbereich von 0 bis 70°C, vorzugsweise zwischen 30 und 50°C bei Normaldruck durch. Es können aber auch höhere Reaktionstemperaturen zur Anwendung kommen, z.B. 70 bis 90°C. Jedoch ist es wegen der bei hohen Temperaturen geringen Löslichkeit von z.B. Ethylenoxid angebracht, bei leicht erhöhtem Druck zu copolymerisieren.

Nach der bevorzugten Arbeitsweise leitet man das Gemisch der Ausgangsstoffe zur Copolymerisation durch den Reaktor, wobei man das den Reaktor verlassende Reaktionsgemisch durch erneute Zugabe von Alkylenoxid auf die gewünschte und möglichst konstante Konzentration einstellt. Die Zugabe der Verbindung mit reaktivem Wasserstoff erfolgt in den meisten Fällen durch eine Konzentrationseinstellung im Tetrahydrofuran zu Beginn der Reaktion. Wenn es gewünscht wird, kann die Zugabe der Verbindung mit reaktivem Wasserstoff auch laufend erfolgen. Im allgemeinen wird man aber auf diese Maßnahme verzichten. Das Reaktionsgemisch, das laufend bei möglichst konstanter Alkylenoxid-Konzentration gehalten wird, führt man solange im Kreise über das Katalysatorbett, bis die gewünschte Menge Alkylenoxid, die später im Copolymerisat enthalten sein soll, der zuvor festgelegten Menge Tetrahydrofuran zugeführt wurde.

Im allgemeinen liegt die so benötigte Reaktionszeit für ein Reaktionsgemisch, das beispielsweise zu 50 Gew.-% aus Copolymerisat besteht, zwischen 2 und 20, vorzugsweise zwischen 4 und 10 Stunden. Die stationäre Alkylenoxid-Konzentration im Reaktionsgemisch ist niedrig und wird zweckmäßigerweise wie oben ausgeführt im allgemeinen zwischen 0,1 und 2 Gew.-% eingehalten. Deshalb ist nur eine geringe Nachreaktionszeit erforderlich, um die Konzentration von Alkylenoxid im Reaktionsgemisch an die Nachweisbarkeitsgrenze zurückzuführen. Nach 1 bis 3 Stunden Nachreaktionszeit ist im allgemeinen die Alkylenoxid-Konzentration nahe 0. Will man auf diese Nachreaktionsphase, die zu einer geringen Verbreiterung der Molekulargewichtsverteilung führt, verzichten, um ein extrem eng verteiltes Polymerisat zu erhalten, so kann nach beendeter Polymerisation und Katalysatorabtrennung nicht umgesetztes Alkylenoxid durch Destillation entfernt werden.

Da in der Reaktionsmischung, die vom Katalysatorbett getrennt ist, keine weitere Umsetzung erfolgt, verbleibt schließlich eine Lösung von Copolymerisat in Tetrahydrofuran, die im allgemeinen einen Copolymerisat-Gehalt von ca. 30 bis 70% Polymerisat aufweist. Das Polymerisat gewinnt man in reiner Form durch Abdampfen des nicht umgesetzten Tetrahydrofurans. Letzteres kann für eine neue Polymerisation verwendet werden.

Die Copolymerisation verläuft exotherm. Deshalb sorgt man durch Kühlung des Reaktors oder des Stromes des Reaktionsgemisches, der außerhalb des Reaktors im Kreislauf gepumpt wird, für Temperaturkonstanz.

Die bei der Copolymerisation erhaltenen Produkte, insbesondere solche mit Molekulargewichten von 300 bis 5000 sind für die Herstellung von Polyurethanen oder Polyestern hervorragend geeignet. Werden bei der Copolymerisation als Startermoleküle (Verbindungen mit reaktiven Wasserstoffatomen) Carbonsäuren verwendet, so entstehen primär Halbester, die wie oben angegeben vor der Umsetzung mit Diisocyanaten oder Dicarbonsäuren zu den Glykolen verseift werden. Die aus dem Copolymeren hergestellten Fertigpolymerisate besitzen ein hohes mechanisches Niveau bei guter Kälte-, Mikroben- und Verseifungsfestigkeit. Im Vergleich zum homopolymeren Polytetramethylenetherglykol haben die Copolymere einen niedrigeren Erstarrungspunkt und eine geringere Viskosität. Sie lassen sich also ohne zusätzlichen Verflüssigungs- oder Schmelzprozeß bei der Weiterverarbeitung verwenden.

Das erfindungsgemäße Verfahren hat den erheblichen Vorteil, daß bei der Copolymerisation praktisch keine Nebenprodukte, insbesondere nur sehr geringe Anteile cyclischer Oligomere gebildet werden und daß die Reaktion zu einem vollständigen Umsatz des 1,2-Alkylenoxids und der Verbindung mit reaktivem Wasserstoff geführt werden kann. Je geringer die Alkylenoxid- Konzentration in der Reaktionsmischung ist, umso geringer ist der Anfall an unerwünschten oligomeren Ethern und umso geringer ist die Uneinheitlichkeit der Copolymeren. Obwohl diese wichtigen Vorteile durch eine verlängerte Reaktionszeit erkauft werden, stellt dies keinen nennenswerten ökonomischen Nachteil dar, zumal es sich um spezifisch billigen Reaktionsraum handelt. Unerwartet und mit den Erfahrungen auf dem Polymerisationsgebiet nicht ohne weiteres zu erklären, besitzen die erfindungsgemäß hergestellten Copolymere eine sehr enge Molekulargewichtsverteilung, die beispielsweise für Polymerisate mit dem Molekulargewicht um 1000 bis 1500 im Bereich eines Heterogenitätsquotienten $M_w/M_n$ von 1,6 bis 2,2 liegt. Im allgemeinen entstehen nämlich bei der kontinuierlichen Polymerisation Polymere mit engerer Molekulargewichtsverteilung als bei der diskontinuierlichen Polymerisation. So weisen z.B. die durch kontinuierliche Polymerisation erhältlichen Polymerisate mit einem Molekulargewicht von 1000 bis 1500 im Durchschnitt Heterogenitätsquotienten $M_w/M_n$ von 3,5 bis 4,5 auf.

Polymere mit enger Molekulargewichtsverteilung sind insbesondere bei der Weiterverarbeitung zu Polyurethanen oder Polyester eher geeignet, Produkte mit wertvollem mechanischem Niveau zu liefern, als Einsatzprodukte, die hinsichtlich der Molekulargewichtsverteilung sehr uneinheitlich sind. Unerwartet war auch, daß das erfindungsgemäße Verfahren Copolymerisate mit äußerst niedriger Farbzahl liefert. Dem Fachmann ist nämlich bekannt, daß Alkylenoxid-Polymerisate, die man durch kationische Polymerisation erhält, meist tief gefärbt sind. Die Copolymerisate weisen pro Molekül 2 äquivalente Hydroxylgruppen auf. Erstaunlicherweise sind die Produkte fast zu 100% bifunktionell, obwohl von Alkylenoxid-Polymeren bekannt ist, daß sie meist keine strenge Bifunktionalität aufweisen.

Erstaunlicherweise erhält man bei der Verwendung von Bleicherde in getrocknetem Zustand (Wassergehalt unter 0,5 Gew.-%) besonders vorteilhafte Ergebnisse, obwohl die Polymerisation in Gegenwart von Wasser, z.B. als Verbindung mit reaktivem Wasserstoff durchgeführt wird. Unerklärlicherweise sinkt die Reaktionsgeschwindigkeit ab, wenn man Bleicherden verwendet, die z.B. 1 bis 5 Gew.-% Wasser enthalten.

Ein wichtiger Vorteil des Verfahrens ist es, daß die Reaktionsgemische, in denen die Copolymeren in Konzentrationen von 40 bis 60% enthalten sind, nur der Befreiung von überschüssigem Tetrahydrofuran bedürfen, um der Endanwendung, z.B. der Herstellung von Polyurethanen zugeführt werden zu können, sofern man durch eine kurze Nachreaktionszeit für die vollständige Abreaktion des Alkylenoxids gesorgt hat. Das zweckmäßig durch Destillation im Vakuum zu entfernende Tetrahydrofuran kann erneut, ohne daß es einer Reinigungsoperation bedarf, für die Umsetzung verwendet werden.

Die folgenden Beispiele sollen das erfindungsgemäße Verfahren näher erläutern, ohne es zu begrenzen. Die genannten Teile sind Gewichtsteile, sie verhalten sich zu Volumenteilen wie Kilogramm zu Liter.

Beispiel 1 (s. Abbildung)

Marktgängiges technisches Tetrahydrofuran wurde nach Beispiel 1 der EP-PS 3 112 gereinigt. Aus Bleicherde, die im Handel unter der Bezeichnung ®Tonsil Optimum FF der Süd-Chemie AG, München erhältlich ist, wurden Strangpreßlinge mit einem Durchmesser von 2 bis 3 mm und einer durchschnittlichen Länge von 4 mm hergestellt und 4 Stunden bei 200°C und 40 mbar getrocknet. Der Wassergehalt nach Fischer betrug danach 0,03%.

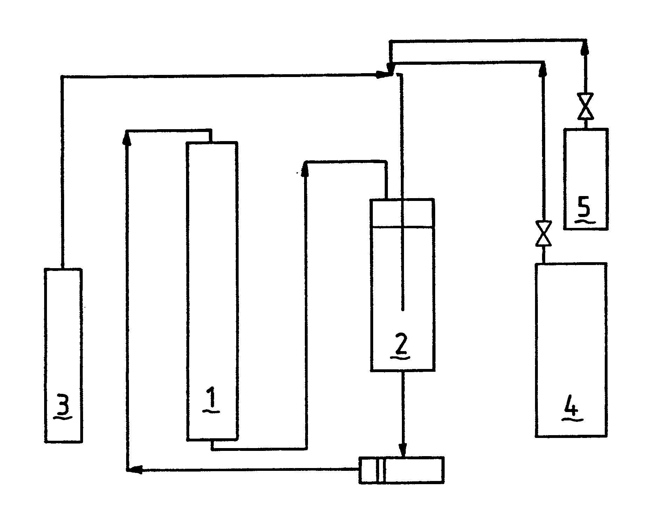

Die Polymerisation wurde in einer Apparatur durchgeführt, deren Prinzip in der Abbildung wiedergegeben ist. Die getrockneten Strangpreßlinge wurden in ein mit einem thermostatisierten Kühlmantel versehenes Reaktionsrohr (1) mit einem Inhalt von 5000 Volumenteilen und einem Verhältnis von Durchmesser zu Länge von ungefähr 1 : 10 eingefüllt. Das Vorratsgefäß (2) mit einem Nutzvolumen von 7000 Volumenteilen wurde mit 5000 Teilen des gereinigten Tetrahydrofurans, 43 Teilen Wasser und 20,3 Teilen Ethylenoxid beschickt. Dabei wurden Tetrahydrofuran (4), Wasser (5) und Ethylenoxid (3) den dafür vorgesehenen Vorratsbehältern entnommen. Diese Mischung der Ausgangsverbindungen wurde auf das Katalysatorbett (1), dessen Temperatur auf 47 bis 49°C gehalten wurde, gegeben. Sobald das Katalysatorbett mit Frischzulauf gefüllt war, wurde im Vorratsgefäß noch einmal dieselbe Menge Frischzulauf hergestellt und diese nun fortlaufend über das Katalysatorbett geführt. Der Überlauf gelangte in das Vorratsgefäß (2) zurück. Durch kontinuierliches Eingasen von Ethylenoxid aus dem Vorratsgefäß (3) in die Zulaufmischung im Vorratsgefäß (2) wurde dafür gesorgt, daß die Ethylenoxid-Konzentration im Vorratsgefäß (2) konstant bei 0,4 Gew.-% gehalten wurde. Durch die Eingasmenge von 35 Teilen Ethylenoxid in der Stunde gelang es, diese Konzentration in der Zulaufmischung aufrecht zu erhalten. Nach 9 Stunden Reaktionszeit waren 315 Teile Ethylenoxid in die Reaktionsmischung eingetragen. Man ließ das Reaktionsgemisch nun noch 4 Stunden bei Reaktionstemperatur nachreagieren. Dabei wurde das Reaktionsgemisch bei der Pumpenleistung von 15 l/h, die bei der gesamten Versuchsdauer konstant gehalten wurde, aus dem Vorratsgefäß (2) im Kreise über den Katalysator (1) geführt. Danach war die Ethylenoxid-Konzentration in der Zulaufmischung auf 0 Gew.-% abgesunken. Die insgesamt ein- und umgesetzte Ethylenoxid-Menge betrug 315 Teile.

Dem Vorratsgefäß (2) wurden durch Entleerung 5350 Teile Reaktionsmischung entnommen. Dieses erste Reaktionsgemisch wurde verworfen. Das Vorratsgefäß wurde anschließend erneut mit 5500 Teilen Frischzulauf beschickt, der aus 98,3% Tetrahydrofuran, 0,7% Wasser und 0,4% Ethylenoxid bestand. Diese Mischung wurde nun mit einer Pumpenleistung von 12000 Volumenteilen pro Stunde durch das Katalysatorbett (1) im Kreis geführt. Gleichzeitig wurden in das Reaktionsgefäß (1) 35 Teile Ethylenoxid stündlich eingegast, wodurch es gelang, die Konzentration an Ethylenoxid im Vorratsgefäß bei 0,4% zu halten. Nach 9 Stunden wurde die Ethylenoxid-Zufuhr unterbrochen. Das Reaktionsgemisch wurde noch 4 Stunden mit einer stündlichen Leistung von 12000 Volumenteilen pro Stunde im Kreise gepumpt. Das Reaktionsprodukt im Vorratsgefäß (2) wurde abgelassen und das Vorratsgefäß in der oben beschriebenen Weise erneut mit der Mischung aus Tetrahydrofuran, Wasser und Ethylenoxid beschickt. Dann wurde die Polymerisation wie oben beschrieben 9 Stunden lang bei weiteren 4 Stunden für die Nachreaktion ausgeführt. Das dabei erhaltene Reaktionsgemisch unterschied sich kaum noch von den Austrägen, die in 100 weiteren Polymerisationsansätzen dieser Art erhalten wurden.

Für die Isolierung des Copolymeren wurde das farblose Reaktionsgemisch (Farbzahl <5 APHA) zunächst unter Normaldruck und dann im Vakuum bei 1 mbar bis 200°C im Filmverdampfer eingedampft. Das erhaltene Destillat bestand zu 98% aus reinem Tetrahydrofuran und zu 2% aus niedermolekularen Copolymeren mit einem durchschnittlichen Molekulargewicht von ca. 250. Aus der bei der Eindampfung erhaltenen Menge des Copolymeren errechnete sich ein 45%iger Umsatz des eingesetzten Tetrahydrofurans. Eingesetztes Ethylenoxid war vollständig umgesetzt worden und befand sich quantitativ mit einem Anteil von ca. 15 Gew.-% im erhaltenen Copolymerisat. Aus der Hydroxylzahl des Copolymeren errechnete sich dessen Molekulargewicht zu 1260. Die durch Gelpermeationschromatographie bestimmte Uneinheitlichkeit des Copolymeren war $M_w/M_n = 1,7$.

Beispiel 2

In ein thermostatisiertes und gerührtes Reaktionsgefäß mit 2000 Volumenteilen Reaktionsvolumen wurden 195 Teile der Bleicherdenstränge, wie sie im Beispiel 1 beschrieben sind, gegeben. Dann wurde das Reaktionsgefäß mit einer Mischung aus 950 Teilen Tetrahydrofuran und 40 Teilen Ameisensäure beschickt. Unter Rühren wurde das Gemisch dann gleichmäßig während 5 Stunden mit 10 Teilen Propylenoxid pro Stunde versetzt. Dadurch wurde die Propylenoxid-Konzentration im Umsetzungsgemisch konstant bei ... Gew.-% gehalten. Die Reaktionstemperatur betrug 50°C. Nach Zugabe der gesamten Propylenoxid-Menge wurde noch 4 Stunden bei Reaktionstemperatur gerührt. Durch Filtration wurde die erhaltene Lösung des Copolymeren vom Katalysator getrennt. Das Filtrat war frei von Propylenoxid und bestand aus 43% Copolymeren und 57% nicht umgesetztem Tetrahydrofuran, wie durch Eindampfen bei Normaldruck und im Vakuum festgestellt wurde. Das lösungsmittelfreie Copolymere hatte eine Verseifungszahl von 37 mg KOH und eine Hydroxylzahl von 13 mg KOH/g. Das Produkt enthielt weniger als 1% cyclische oligomere Ether. Das esterhaltige Polymerisat wurde nun mit der gleichen Menge Methanol und 10 Teilen Calciumhydroxid versetzt und destillativ an einer Kolonne mit 20 theoretischen Böden unter Abdestillieren des Methylformiats bei Normaldruck bei 32°C zum Glykol umgeestert. Nach vollständiger Umesterung wurde das als Umesterungskatalysator verwendete Calciumhydroxid abfiltriert und die methanolische Lösung des Copolymerisats zunächst bei Normaldruck später im Vakuum am Filmverdampfer vollständig eingedampft. Das erhaltene Polymerisat war esterfreies, reines Glykol mit einer OH-Zahl von 51 mg KOH/g, was einem Molekulargewicht von 2210 entspricht. Das $^{13}$CNMR-Spektrum zeigte, daß das Copolymere aus ca. 10% Propylenoxid und 90% Tetrahydrofuran entstanden war. Die Uneinheitlichkeit des Produktes $M_w/M_n$ lag bei 1,8.

## Ansprüche

1. Verfahren zur diskontinuierlichen Herstellung von Polyoxibutylenpolyoxialkylenglykolen durch Copolymerisation von Tetrahydrofuran mit 1,2-Alkylenoxiden in Gegenwart von Verbindungen mit reaktivem Wasserstoff, die in Mengen von 0,5 bis 10 Mol-%, bezogen auf das Tetrahydrofuran, eingesetzt werden, wobei die Polymerisation an einem Bleicherde- oder Zeolith-Katalysator, der in der protonisierten Form vorliegt und einen Wassergehalt von unter 0,5 Gew.% aufweist, durchgeführt wird und wobei man gegebenenfalls gebildete Estergruppen enthaltende Copolymere auf an sich übliche Weise verseift, dadurch gekennzeichnet, daß man das 1,2-Alkylenoxid dem Reaktionsgemisch so zuleitet, daß die Konzentration des 1,2-Alkylenoxids im Reaktionsgemisch während der Polymeisation im wesentlichen konstant und unter 2 Gew.% gehalten wird.

2. Verfahren nach Anspruch 1, dadurch gekennzeichnet, daß man als 1,2-Alkylenoxid Ethylenoxid und/oder 1,2-Propylenoxid verwendet

3. Verfahren nach Anspruch 1, dadurch gekennzeichnet, daß man das Molverhältnis des eingesetzten Tetrahydrofurans zur Summe des in die Reaktion eingebrachten 1,2-Alkylenoxids zwischen 15 : 1 bis 2 : 1 hält.

4. Verfahren nach Anspruch 1, dadurch gekennzeichnet, daß die Copolymerisation bei einer Reaktionstemperatur von 0 bis 70°C unter Normaldruck durchgeführt wird.

5. Verfahren nach Anspruch 1, dadurch gekennzeichnet, daß man als Verbindung mit reaktivem Wasserstoff Wasser verwendet.

6. Verfahren nach Anspruch 1, dadurch gekennzeichnet, daß man als Verbindung mit reaktivem Wasserstoff eine Carbonsäure mit 1 bis 8 C-Atomen verwendet.

## Claims

1. A process for the batchwise preparation of polyoxybutylene polyoxyalkylene glycols by copolymerizing tetrahydrofuran with a 1,2-alkylene oxide in the presence of compounds containing reactive hydrogen which are employed in amounts of from 0.5 to 10 mol% based on the tetrahydrofuran, the polymerization being carried out over a bleaching earth or zeolite catalyst which is present in the protonated form and has a water content of less than 0.5% by weight, and any copolymers containing ester groups which may have formed being hydrolyzed in a conventional manner, wherein the 1,2-alkylene oxide is fed to the reaction mixture in such manner that the concentration of the 1,2-alkylene oxide in the reaction mixture is kept substantially constant and below 2% by weight during the polymerization.

2. A process as claimed in claim 1, wherein ethylene oxide and/or 1,2-propylene oxide is used as the 1,2-alkylene oxide.

3. A process as claimed in claim 1, wherein the molar ratio of the tetrahydrofuran employed to the total 1,2-alkylene oxide introduced into the reaction is kept at from 15 : 1 to 2 : 1.

4. A process as claimed in claim 1, wherein the copolymerization is carried out at from 0 to 70°C under atmospheric pressure.

5. A process as claimed in claim 1, wherein water is used as the compound containing reactive hydrogen.

6. A process as claimed in claim 1, wherein a carboxylic acid having from 1 to 8 carbon atoms is used as the compound containing reactive hydrogen.

## Revendications

1. Procédé de préparation discontinue de polyoxybutylènepolyalkylèneglycols par copolymérisation de tétrahydrofuranne avec des 1,2-alkylènoxydes en présence de composés à hydrogène réactif, qui sont mis en oeuvre en quantités de 0,5 à 10% (moles), rapportés au tétrahydrofuranne, la polymérisation étant effectuée au contact d'un catalyseur en terre à blanchir ou en zéolithe, présent sous forme protonisée et ayant une teneur en eau inférieure à 0,5% en poids, et des copolymères éventuellement formés, contenant des groupes ester étant saponifiés, de manière en soi usuelle, caractérisé par le fait que le 1,2-alkylènoxyde est amené au mélange réactionnel de manière telle que la concentration du 1,2-alkylènoxyde dans le mélange réactionnel, pendant la polymérisation, est maintenue essentiellement constante, à une valeur inférieure à 2% en poids.

2. Procédé selon la revendication 1, caractérisé par le fait que l'on utilise, comme 1,2-alkylènoxydes, de l'éthylènoxyde et/ou du 1,2-propylènoxyde.

3. Procédé selon la revendication 1, caractérisé par le fait que l'on maintient entre 15/1 et 2/1 le rapport molaire du tétrahydrofuranne mis en oeuvre à la somme des quantités de 1,2-alkylènoxyde amenées à la réaction.

4. Procédé selon la revendication 1, caractérisé par le fait que la polymérisation est effectuée à une température de réaction comprise entre 0 et 70 degrés C, sous pression ordinaire.

5. Procédé selon la revendication 1, caractérisé par le fait que l'on utilise de l'eau comme composé à hydrogène réactif.

6. Procédé selon la revendication 1, caractérisé par le fait que l'on utilise, comme composé à hydrogène réactif, un acide carboxylique à 1 à 8 atomes C.